# FASCICULE DE BREVET EUROPEEN

(11) **EP 2 260 192 B1**
(45) Date de publication et mention de la délivrance du brevet: **15.05.2013**
(21) Numéro de dépôt: 09723601.2
(22) Date de dépôt: 06.03.2009
(51) Int. Cl.: F02C 1/04, F02C 1/06, F02C 3/20

(54) **DISPOSITIF DE PRODUCTION D'ENERGIE A PARTIR DE BIOMASSE**
VORRICHTUNG ZUR ERZEUGUNG VON ENERGIE AUS BIOMASSE
DEVICE FOR PRODUCING ENERGY FROM BIOMASS

(30) Priorité: 07.03.2008 FR 0851491
(43) Date de publication de la demande: 15.12.2010
(73) Titulaire: EFGT SAS, 75016 Paris (FR); Gautreau, Jean-Paul, 33560 Sainte Eulalie (FR)
(72) Inventeur: GAUTREAU, Jean-Paul, F-33560 Sainte Eulalie (FR)
(74) Mandataire: Regimbeau
(86) Numéro de dépôt international: PCT/FR2009/050372
(87) Numéro de publication internationale: WO 2009/115746

(56) Documents cités:
- WO-A-2007/124592
- DE-A1- 3 112 648
- DE-A1- 3 833 832
- GB-A- 602 113
- NL-C- 51 521
- US-A- 2 472 846
- US-A- 4 466 249
- GERICKE B ET AL: "BIOMASSENVERSTROMUNG DURCH VERGASUNG UND INTEGRIERTE GASTURBINENPROZESSE" VGB KRAFTWERKSTECHNIK, VGB KRAFTWERKSTECHNIK GMBH. ESSEN, DE, vol. 74, no. 7, 1 juillet 1994 (1994-07-01), pages 595-604, XP000457120 ISSN: 0372-5715

## Description

La présente invention se rapporte à un dispositif de production d'énergie, notamment d'énergies électrique et thermique, à partir de biomasse.

Dans le domaine de l'énergie, on entend par biomasse l'ensemble des matières organiques pouvant devenir des sources d'énergie. Elles peuvent être utilisées soit directement, par exemple par combustion de matière solide tel que le bois, soit indirectement, après une gazéification, à savoir en transformant un combustible solide en combustible gazeux, après une méthanisation, à savoir une dégradation de la matière organique ou sous forme liquide.

Ces sources d'énergie ont pour avantage d'avoir un bilan quantitatif en CO₂ sensiblement équilibré. En effet, même si la combustion rejette du CO₂ dans l'atmosphère, ce dernier a été au préalable prélevé et transformé en matière, par photosynthèse par exemple.

De manière connue, la biomasse peut être transformée en énergie électrique dans des installations fonctionnant selon un cycle conventionnel vapeur.

Mêmes si les centrales électriques à cycle vapeur sont éprouvées, ces installations sont destinées à la production électrique de l'ordre de quelques Mégawatts pour obtenir un rendement intéressant, compte tenu de leur complexité, notamment en raison de la mise en oeuvre d'un fluide secondaire en évolution bi phasique.

De manière connue, la biomasse peut être transformée en énergie électrique dans des dispositifs fonctionnant selon le principe des moteurs de type Stirling. Cependant, même si ces installations ont des rendements élevés, elles sont destinées à la production de quelques KiloWatts.

Or, s'il existe de nombreuses sources de biomasse générées par l'activité humaine, ces dernières sont généralement disséminées et leur volume n'est adapté ni aux centrales électriques à cycle vapeur, ni aux installations fonctionnant selon le principe des moteurs Stirling.

Même si dans certains cas la biomasse peut être collectée et transportée en vue d'être utilisée dans des centrales électriques à cycle vapeur de grandes capacités de production, le transport conduit à déséquilibrer le bilan CO₂ et à réduire la rentabilité.

Par conséquent, il existe un besoin d'installations dites intermédiaires permettant d'obtenir un rendement satisfaisant dans les plages intermédiaires de l'ordre de quelques Kilowatts à un Mégawatt.

Dans le domaine de la production d'énergie par transformation de l'énergie thermique en énergie cinétique, on connait les turbines à gaz à combustion interne. Dans ce cas, un fluide moteur, généralement naturellement oxygéné, traverse un compresseur afin d'augmenter sa pression. En suivant, le fluide moteur subit une élévation de température, généralement par mélange dudit fluide moteur avec un combustible qui effectue une réaction oxydante. Enfin, le fluide moteur est détendu dans une turbine.

Ces turbines à combustion interne ont généralement des rendements élevés. Toutefois, elles ne peuvent utiliser qu'un combustible ne contenant pas de particules susceptibles d'endommager les parties constitutives de la turbine et sont limitées aux combustibles parfaitement vaporisables et propres tels le gaz naturel, les gaz parfaitement épurés, les produits liquides raffinés filtrés.

Par conséquent, les turbines à combustion interne ne peuvent pas utiliser un combustible telle que la biomasse qui est chargée d'impuretés.

Le document DE3112648 décrit un système de production d'énergie avec une combustion interne comprenant un premier train d'arbres auquel sont reliés un compresseur et une première turbine, un premier échangeur assurant les échanges thermiques entre d'une part, un fluide dit moteur comprimé préalablement par ledit compresseur, utilisé par la suite comme comburant dans une première chambre de combustion puis détendu dans ladite première turbine, et d'autre part des gaz chauds issus d'une combustion de la biomasse. Ce système comprend un second train d'arbres auquel sont reliés une seconde turbine et des moyens de conversion de l'énergie cinétique en une autre énergie, ladite seconde turbine étant alimentée en fluide issu de la première turbine et préalablement chauffé dans un second échangeur thermique. Le fluide sortant de la seconde turbine est utilisé comme comburant dans une seconde chambre de combustion utilisée pour chauffer le premier échangeur puis dans une troisième chambre de combustion utilisée pour chauffer le second échangeur. Comme précédemment, le fluide moteur traversant successivement les deux turbines est issu d'une combustion, ce qui induit les inconvénients précédemment cités. Selon un mode de réalisation, on peut recourir à une combustion externe avec deux turbines en série. Cette variante ne permet pas d'optimiser le rendement comme cela sera expliqué ultérieurement.

Afin de pallier cet inconvénient, il est possible d'utiliser des turbines à gaz à combustion externe. Dans ce cas, la combustion est opérée de manière conventionnelle dans une chambre dédiée, à la pression atmosphérique, l'élévation de température du fluide moteur étant opérée dans un échangeur dans lequel circule les gaz chauds produits lors de la combustion.

Selon un principe de fonctionnement appelé simple cycle, on utilise un compresseur et une turbine placés sur une même ligne d'arbres.

Dans un premier temps, un fluide moteur, généralement l'air ambiant, est comprimé dans le compresseur. Cette compression permet d'obtenir une augmentation de la pression mais également une première élévation de température du fluide moteur.

En suivant, le fluide moteur subit une élévation de température en traversant un échangeur dans lequel circule les gaz chauds produits lors de la combustion de la biomasse.

Enfin, le fluide moteur est détendu dans une turbine ce qui provoque la rotation du rotor de la turbine qui entraîne la ligne d'arbres commune. Ainsi, une partie de l'énergie est utilisée pour entraîner le compresseur, l'énergie restante peut être convertie en énergie électrique en utilisant une génératrice de courant électrique.

Cependant, un fonctionnement selon un cycle simple ne permet pas d'optimiser le rendement de la production d'énergie.

Pour améliorer ce rendement, des solutions ont été envisagées, notamment dans le document US-2001/0015060.

Pour améliorer le rendement, une technique consiste à récupérer une partie de l'énergie perdue à l'échappement de la turbine, soit pour préchauffer le combustible, soit pour préchauffer un autre fluide dit fluide secondaire utilisé dans un cycle vapeur pour produire de l'énergie ou soit pour apporter un complément de calories lors de l'élévation de température du fluide moteur entre le compresseur et la turbine.

Le préchauffage du combustible ne conduit pas à une augmentation optimale du rendement.

La récupération de la chaleur pour préchauffer un second fluide utilisé dans un cycle vapeur permet d'augmenter le rendement. Cependant, elle conduit à complexifier l'installation en raison notamment de l'utilisation d'un fluide en évolution bi phasique. Par conséquent, ce type d'installations peut difficilement être amortie pour des productions d'énergie allant de quelques KW à 1 MW.

La récupération de chaleur provenant du fluide moteur à l'échappement de la turbine pour préchauffer le fluide moteur à la sortie du compresseur n'est pas optimale et limitée selon les techniques connues.

Ainsi, lorsqu'on choisit pour améliorer le rendement d'augmenter le taux de compression, cela se traduit également par une élévation supplémentaire de la température du fluide moteur à la sortie du compresseur, ce qui réduit d'autant plus la plage de récupération de la chaleur du fluide moteur à la sortie de la turbine.

Si on choisit pour améliorer le rendement d'augmenter la température du fluide moteur à l'entrée de la turbine, notamment grâce à la chaleur récupérée à la sortie de la turbine, les limites sont alors technologiques, par exemple la tenue aux hautes températures des matériaux des parties constitutives de la turbine. Le document NL-51521 décrit un système de production d'énergie comprenant un premier train d'arbres auquel sont reliés un compresseur et une première turbine, un premier échangeur assurant les échanges thermiques entre d'une part, un fluide dit moteur comprimé préalablement par ledit compresseur, puis détendu dans ladite première turbine, et d'autre part des gaz chauds issus d'une chambre combustion. Ce système comprend un second train d'arbres auquel sont reliés une seconde turbine et des moyens de conversion de l'énergie cinétique en une autre énergie, ladite seconde turbine étant alimentée en fluide issu de la première turbine et préalablement chauffé dans un second échangeur thermique placé dans la chambre de combustion. Le fluide sortant de la seconde turbine est utilisé comme comburant dans une chambre de combustion utilisée pour chauffer le premier échangeur et le second échangeur.

Cette solution ne permet pas d'optimiser le rendement.

Aussi, la présente invention vise à pallier les inconvénients des dispositifs de l'art antérieur en proposant un dispositif de production d'énergie, notamment électrique, à partir de la biomasse, permettant d'optimiser le rendement, de conception simple afin de rendre économiquement viable une installation intermédiaire pour la production d'énergie allant de quelques KW à 1 MW.

A cet effet, l'invention a pour objet un dispositif de production d'énergie à partir de biomasse conformément à la revendication 1. D'autres caractéristiques et avantages ressortiront de la description qui va suivre de l'invention, description donnée à titre d'exemple uniquement, en regard des dessins annexés sur lesquels :
- la figure 1 est un schéma illustrant une configuration d'un dispositif de production d'énergie ne faisant pas partie de l'invention,
- la figure 2 est un schéma illustrant un dispositif de production d'énergie selon l'invention,
- la figure 3 est une vue d'ensemble illustrant un dispositif de production selon l'invention, et
- la figure 4 est un schéma du dispositif visible sur la figure 3.

Sur l'ensemble des figures, on a représenté en 20 un dispositif de production d'énergie, notamment d'énergie électrique, à partir d'une source de biomasse 22. Par biomasse, on entend l'ensemble des matières organiques pouvant devenir des sources d'énergie.

Le dispositif 20 de production d'énergie comprend d'une part, une premier train d'arbres 24 comprenant au moins un arbre tournant sur lequel sont montés un compresseur 26 et une première turbine 28, et d'autre part, un premier échangeur 30 comprenant un premier circuit fluidique destiné à un fluide dit moteur, comprimé préalablement par le compresseur 26 et détendu dans la première turbine 28.

Avantageusement, le fluide moteur est l'air ambiant qui peut être filtré au préalable.

Pour la suite de la description, on entend par turbine un moyen dans lequel un fluide se détend en produisant de l'énergie cinétique. Cette turbine peut avoir différentes configurations.

Par train d'arbres, on entend un ou plusieurs arbres liés cinématiquement.

Par échangeur, on entend un moyen au niveau duquel sont opérés des échanges thermiques entre deux éléments, notamment entre un fluide moteur et des gaz chauds provenant d'une combustion directe ou indirecte de la biomasse.

Selon les exemples illustrés, le fluide moteur circule dans un circuit fluidique au niveau de l'échangeur qui est placé dans une veine de gaz chauds. Toutefois, d'autres solutions peuvent être envisagées pour assurer ce transfert thermique. Selon les variantes, les échanges thermiques peuvent être de type statique ou dynamique.

A titre d'exemple, dans le cas d'un échangeur statique, des tubes, des plaques et/ou des structures alvéolaires sont agencés pour faciliter les échanges thermiques entre les deux flux de fluides qui sont parfaitement étanches entre eux.

A titre d'exemple, dans le cas d'un échangeur dynamique, on peut utiliser une structure alvéolaire en forme de disque de préférence en céramique qui tourne sur lui-même. Le flux de gaz chauds charge un secteur du disque qui accumule la chaleur au niveau de sa structure alvéolaire alors que le flux du fluide moteur à chauffer se charge thermiquement au contact de la structure alvéolaire d'un autre secteur du disque préalablement chauffé.

Les échangeurs dynamiques ont des encombrements plus réduits à rendement identique.

Par combustion directe de la biomasse, on entend que la biomasse subit une réaction chimique d'oxydation. A titre d'exemple, des copeaux de bois peuvent être brûlés dans une chambre de combustion pour générer des gaz chauds.

Par combustion indirecte de la biomasse, on entend que la biomasse subit une première réaction, par exemple une gazéification, à savoir une transformation d'un combustible solide en un combustible gazeux, ou une méthanisation, à savoir une dégradation de la matière organique, de manière à produire des gaz qui sont en suivant brûlés pour produire des gaz chauds.

A titre d'exemple, la biomasse peut être gazéifiée dans un gazéificateur associé à un cyclone.

Selon l'invention, les caractéristiques du compresseur 26, de la turbine 28 et/ou de l'échangeur 30 sont déterminées de manière à ne pas générer d'énergie résiduelle. Ainsi, la turbine 28 délivre au niveau de l'arbre tournant seulement l'énergie cinétique nécessaire au compresseur 26.

Le dispositif de production de l'énergie comprend un second train d'arbres 32 comprenant au moins un arbre sur lequel sont montés une seconde turbine 34 et des moyens de conversion 36 de l'énergie cinétique en énergie électrique ou autre.

Selon l'invention, le fluide moteur utilisé dans la seconde turbine est le même fluide moteur ayant traversé le compresseur 26 mais pas la première turbine. Selon un mode de réalisation, les moyens de conversion 36 se présentent sous la forme d'une génératrice de courant. Selon les exemples illustrés, le second train d'arbres 32 peut comprendre au moins deux arbres, un premier arbre relié à la seconde turbine 34, un second arbre relié aux moyens de conversion 36, les deux arbres étant reliés par des moyens d'accouplement.

Selon l'invention, le fluide moteur traverse, préalablement à son introduction dans la seconde turbine 34, au moins un échangeur comprenant un circuit fluidique destiné au fluide dit moteur.

Selon l'invention on prévoit une disposition des turbines en parallèle, le fluide moteur est introduit dans la seconde turbine 34 après son passage dans le compresseur 26 sans traverser au préalable la première turbine 28.

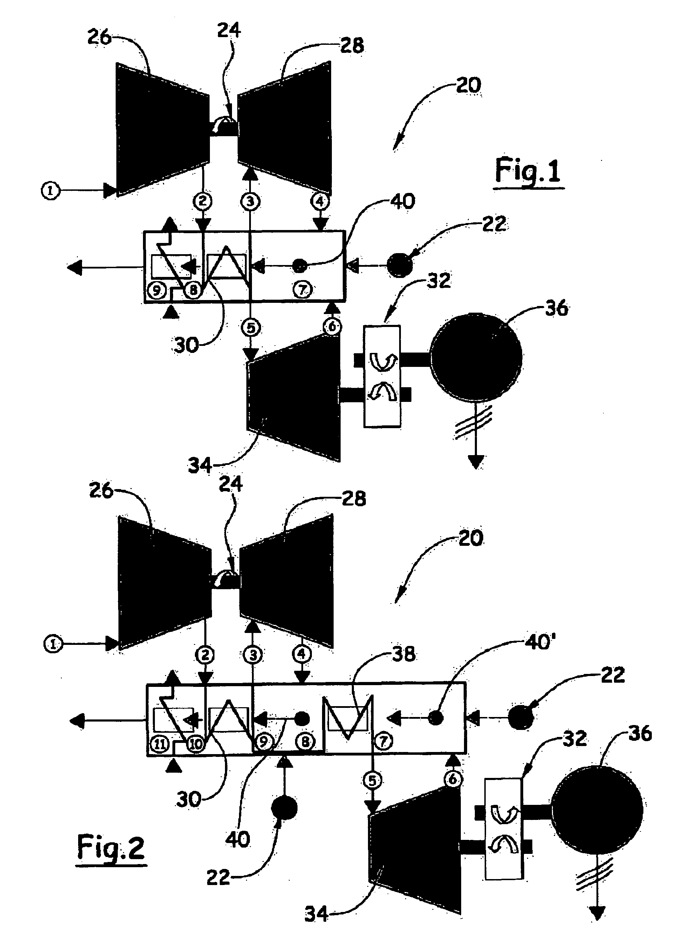

Selon la configuration illustrée sur la figure 1, le fluide moteur est introduit dans la seconde turbine après avoir traversé le premier échangeur 30.

Dans ce cas, le fluide moteur non utilisé par la première turbine 28 est détendu dans la seconde turbine 34 sous les mêmes conditions que la première turbine. Selon un mode de réalisation, la seconde turbine 34 est reliée au premier échangeur 30 et des moyens de régulation des flux sont prévus à la sortie du premier échangeur afin d'ajuster le flux du fluide moteur orienté vers chacune des deux turbines. Selon un mode de réalisation, on utilise une régulation de pression en déverse disposée à l'entrée de la turbine 34 afin de maintenir constante la pression dans les conduites prévues pour le fluide moteur.

Cette solution a pour avantage de ne prévoir qu'une seule chambre de combustion et un seul échangeur.

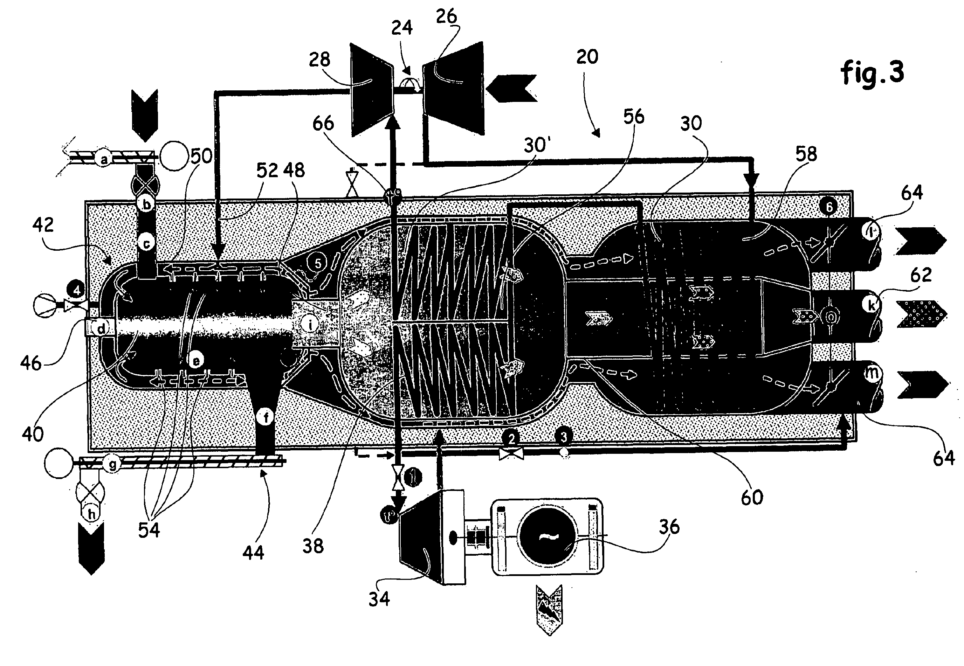

Selon une variante illustrée sur les figures 2 et 3, le fluide moteur est introduit dans la seconde turbine après avoir traversé un second échangeur disposé en série avec le premier échangeur. Dans ce cas, le fluide moteur non utilisé par la première turbine 28 est détendu dans la seconde turbine 34 à la même pression mais à une température généralement plus élevée.

Cette variante est préférée à la configuration illustrée sur la figure 1 car elle permet de différencier les températures du fluide moteur à l'entrée des turbines 28 et 34, et d'optimiser ainsi le fonctionnement des deux turbines et d'améliorer le rendement.

Selon les cas, le dispositif de production d'énergie peut comprendre une seule chambre de combustion 40 comme illustré sur la figure 3 ou deux chambres 40, 40' de combustion, une pour le premier échangeur 30 et une autre pour le second échangeur 38.

Selon un mode de réalisation, le fluide moteur sortant de la première turbine 28 et/ou de la seconde turbine 34 peut être utilisé pour préchauffer le combustible dans au moins une des chambres de combustion pour améliorer le rendement de la combustion.

Cette configuration permet d'augmenter significativement le rendement de l'ensemble car la chaleur du fluide moteur utilisé comme comburant permet d'augmenter le pouvoir calorifique de la combustion.

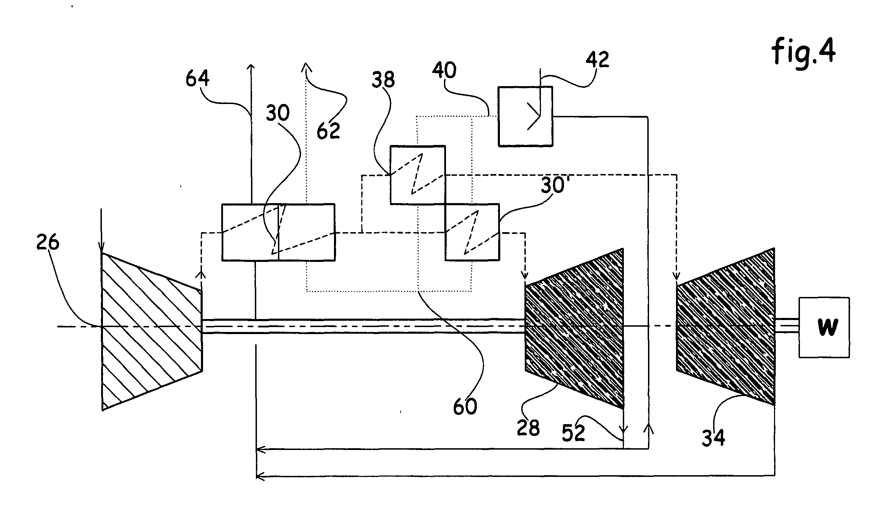

Avantageusement, le comburant utilisé dans au moins une des chambres de combustion est le fluide moteur sortant d'au moins une turbine 28 et/ou 34. Selon un mode de réalisation illustré en détails sur les figures 3 et 4, le fluide moteur, à savoir l'air ambiant, pénètre dans le compresseur 26, via par exemple un silencieux, puis traverse successivement un premier échangeur 30, un autre échangeur 30', la première turbine 28, puis alimente une chambre de combustion 40. En sortie du premier échangeur 30, une partie de l'air est dirigé soit vers l'échangeur 30' soit vers un second échangeur 38 puis la seconde turbine 34.

La chambre de combustion 40 comprend une alimentation en combustible 42 comportant successivement une vis sans fin de dosage du combustible, une vanne écluse alvéolaire d'isolement des flux, une tuyère d'injection de combustible débouchant dans la chambre de combustion.

La chambre de combustion 40 comprend en partie inférieure des moyens d'évacuation des cendres 44 comportant successivement une trémie de récupération des cendres, une vis sans vin d'extraction des cendres, une vanne écluse alvéolaire d'isolement des flux.

La chambre de combustion 40 a une forme sensiblement cylindrique avec à une première extrémité une lunette 46 de visée de flamme et à l'autre extrémité un col d'étranglement 48 pour le passage des fumées et gaz chauds de combustion. La chambre de combustion 40 est disposée dans une enceinte 50 reliée par une alimentation 52 à la sortie de la première turbine 28. L'air chaud issu de ladite première turbine 28 est utilisé comme comburant. Il circule entre l'enveloppe de l'enceinte 50 et celle de la chambre de combustion et est injecté au moins en partie dans ladite chambre de combustion par des piquages 54 (ou tuyères d'injection d'air comburant chaud) ménagés en périphérie de la chambre de combustion 40.

Le col d'étranglement 48 est relié à une première chambre d'échange 56 dans laquelle sont disposés les échangeurs 30' et 38 qui alimentent respectivement les turbines 28 et 34. L'enceinte 50 entoure également la première chambre d'échange 56, l'air chaud issu de la première turbine 28 circulant entre l'enveloppe de l'enceinte 50 et la première chambre d'échange 56.

L'enceinte 50 se prolonge ensuite sous forme d'une seconde chambre d'échange 58 concentrique à un conduit d'échappement 60 assurant le transfert des gaz chauds issus de la première chambre d'échange 56 vers un échappement 62 au niveau duquel ils sont traités avant d'être rejetés dans l'atmosphère.

Selon un mode de réalisation, le premier échangeur 30 est disposé dans la seconde chambre d'échange 58 de manière concentrique au conduit d'échappement 60.

Selon une autre variante illustrée notamment sur la figure 3, l'échangeur 30 comprend au moins un conduit dans lequel circule le fluide moteur disposé dans la seconde chambre d'échange 58 et dans le conduit d'échappement 60. Ainsi, cet échangeur assure un transfert thermique d'une part entre l'air sortant du compresseur et les gaz chauds issus de la combustion, et d'autre part, entre l'air sortant du compresseur et l'air chaud sortant des turbines.

L'air chaud circulant dans l'enceinte 50 est évacué par au moins un conduit d'évacuation 64.

Pour piloter l'alimentation du combustible, on peut prévoir un capteur de température 66 à l'entrée de la première turbine 28.

A titre d'exemple, au regard de la figure 3, l'air a une température de l'ordre de 15°c et une pression de l'ordre de 1,013 Bar(A) à l'entrée du compresseur. En sortie du compresseur, l'air a une température de 162°c et une pression de 3,44 Bar(A).

En sortie du premier échangeur 30, l'air a une température de 371°c. En sortie de l'échangeur 30' et à l'entrée de la première turbine 28, l'air a une température de l'ordre de 700°c. En sortie de l'échangeur 38 et à l'entrée de la seconde turbine, l'air a une température de l'ordre de 550°c.

Après son passage dans la première turbine, l'air a une pression de l'ordre de 1,013 Bar(A) et une température de l'ordre de 480°c. On obtient au niveau de la première turbine un ΔQ de l'ordre de 1932 kW équivalent à celui du compresseur.

Après son passage dans la seconde turbine, l'air a une pression de l'ordre de 1,013 Bar(A) et une température de l'ordre de 361°c. On obtient au niveau de la seconde turbine un ΔQ de l'ordre de 1044 kW qui se traduit par une production électrique de l'ordre de 981 kWh.

Au niveau de la chambre de combustion, l'air chaud utilisé comme comburant a une température de l'ordre de 480°c et les gaz chauds en sortie de la chambre de combustion ont une température de l'ordre de 1050°c. Cette élévation de température est générée en brulant 806 kg/h de bois sous forme de sciure ou de bois calibré à une granulométrie inférieure à 30 mm, pour une teneur en eau de 9% sur poids brut et/ou à la consommation spécifique de 3847 kWh PCI.

Selon l'invention, le dispositif permet d'obtenir un rendement électrique de l'ordre de 0,26 et un rendement global de 0,61 lorsqu'on refroidit séparément les fumées de l'air d'exhaure à 120°c en cogénération. On peut noter que l'air d'exhaure qui représente 60% des rejets est de l'air propre, non contaminé par des fumées, et que ce dernier peut être directement utilisé pour toute opération de chauffage et/ou de récupération sans condensation jusqu'à température ambiante.

## Revendications

1. Dispositif de production d'énergie à partir de biomasse, comprenant :
- un premier train d'arbres (24) auquel sont reliés un compresseur (26) et une première turbine (28),
- un premier échangeur (30) assurant les échanges thermiques entre d'une part, un fluide dit moteur comprimé préalablement par ledit compresseur (26) et détendu dans ladite première turbine (28), et d'autre part des gaz chauds issus de la combustion de la biomasse,
- un second train d'arbres (32) auquel sont reliés une seconde turbine (34) et des moyens de conversion (36) de l'énergie cinétique en une autre énergie,
- un second échangeur (38) assurant les échanges thermiques entre d'une part,
un fluide moteur alimentant la seconde turbine (34), et d'autre part, des gaz chauds issus de la combustion de la biomasse.
**caractérisé en ce que** en sortie du premier échangeur (30), une partie du fluide moteur est dirigée soit vers la première turbine (28) soit vers le second échangeur (38), et le fluide moteur utilisé dans ladite seconde turbine (34) est le fluide moteur sortant du compresseur (26) qui traverse le premier échangeur (30) et le second échangeur (38), non utilisé par la première turbine (28) à la sortie du premier échangeur (30).

2. Dispositif de production d'énergie à partir de biomasse selon la revendication 1, **caractérisé en ce que** les caractéristiques du compresseur (26), de la turbine (28) et/ou de l'échangeur (30) sont déterminées de manière à ce que la turbine (28) produit l'énergie correspondant strictement à l'énergie nécessaire au compresseur (26).

3. Dispositif de production d'énergie à partir de biomasse selon la revendication 1 ou 2, **caractérisé en ce que** des moyens de régulation des flux sont prévus à la sortie du premier échangeur (30) afin d'ajuster le flux du fluide moteur orienté vers chacune des deux turbines.

4. Dispositif de production d'énergie à partir de biomasse selon la revendication 3, **caractérisé en ce que** la seconde turbine (34) est reliée à un second échangeur (38) disposé en série avec le premier échangeur (30).

5. Dispositif de production d'énergie à partir de biomasse selon l'une quelconque des revendications précédentes, **caractérisé en ce que** le fluide moteur sortant d'au moins une turbine (28, 34) est utilisé comme comburant dans au moins une chambre de combustion.

6. Dispositif de production d'énergie à partir de biomasse selon l'une quelconque des revendications précédentes, **caractérisé en ce qu'**il comprend une enceinte (50) dans laquelle est disposée une chambre de combustion (40) reliée en amont à une alimentation en biomasse et en aval à une première chambre d'échange (56) prolongée par un conduit d'échappement (60) des gaz chauds, l'air chaud issu de la première turbine (28) circulant entre d'une part l'enveloppe de ladite enceinte (50) et d'autre part les enveloppes la chambre de combustion (40), de la chambre d'échange (56) et du conduit d'échappement (60), au moins une partie dudit air chaud étant introduit via une pluralité de piquages dans la chambre de combustion.

7. Dispositif de production d'énergie à partir de biomasse selon la revendication 6, **caractérisé en ce que** le premier échangeur (30) est disposé dans une seconde chambre d'échange (58) délimitée par l'enceinte (50) et le conduit d'échappement (60).

8. Dispositif de production d'énergie à partir de biomasse selon la revendication 6, **caractérisé en ce que** le premier échangeur (30) comprend au moins un conduit dans lequel circule le fluide moteur disposé dans une seconde chambre d'échange (58) délimitée par l'enceinte (50) et le conduit d'échappement (60) et dans le conduit d'échappement (60).

9. Dispositif de production d'énergie à partir de biomasse selon l'une quelconque des revendications 6 à 8, **caractérisé en ce qu'**il comprend un échangeur (30') interposé entre le premier échangeur (30) et la première turbine (28) disposé dans la première chambre d'échange (56).

10. Dispositif de production d'énergie à partir de biomasse selon la revendication 9, **caractérisé en ce que** le second échangeur (38) est disposé dans la première chambre d'échange (56).

## Patentansprüche

1. Vorrichtung zur Erzeugung von Energie aus Biomasse, aufweisend:
- ein erster Satz Wellen (24), an welchen ein Kompressor (26) und eine erste Turbine (28) angeschlossen sind,
- ein erster Tauscher (30), der den Wärmetausch zwischen einerseits einem Arbeitsmedium, das vorher durch den Kompressor (26) komprimiert wurde und von der ersten Turbine (28) entspannt wird, und andererseits warmen Gasen, die von der Verbrennung der Biomasse herrühren, ermöglicht,
- ein zweiter Satz Wellen (32), an welchen eine zweite Turbine (34) und Umwandlungsmittel (36) zur Umwandlung von kinetischer Energie in eine andere Energie angeschlossen sind,
- einer zweiter Tauscher (38), der den Wärmetausch zwischen einerseits einem Arbeitsmedium, das die zweite Turbine (34) antreibt, und andererseits warmen Gasen, die von der Verbrennung der Biomasse herrühren, ermöglicht,
**dadurch gekennzeichnet, dass** am Ausgang des ersten Tauschers (30) ein Teil des Arbeitsmediums entweder in Richtung der ersten Turbine (28) oder in Richtung des zweiten Tauschers (38) geleitet wird, und dass das Arbeitsmedium, das in der zweiten Turbine (34) verwendet wird, das Arbeitsmedium ist, das von dem Kompressor (26) herrührt, welches den ersten Tauscher (30) und den zweiten Tauscher (38) durchquert und nicht von der ersten Turbine (28) am Ausgang des ersten Tauschers (30) verwendet wird.

2. Vorrichtung zur Erzeugung von Energie aus Biomasse gemäß Anspruch 1, **dadurch gekennzeichnet, dass** die Kennlinien des Kompressors (26), der Turbine (28) und/oder des Tauschers (30) derart bestimmt werden, dass die Turbine (28) Energie genau entsprechend der erforderlichen Energie für den Kompressor (26) erzeugt.

3. Vorrichtung zur Erzeugung von Energie aus Biomasse gemäß Anspruch 1 oder 2, **dadurch gekennzeichnet, dass** Regulierungsmittel zur Regulierung des Stroms am Ausgang des ersten Tauschers (30) vorgesehen sind, um den Arbeitsmediumstrom, der in Richtung von jeder der zwei Turbinen gerichtet ist, einzustellen.

4. Vorrichtung zur Erzeugung von Energie aus Biomasse gemäß Anspruch 3, **dadurch gekennzeichnet, dass** die zweite Turbine (34) mit einem zweiten Tauscher (38), der zu dem ersten Tauscher (30) in Reihe geschaltet ist, verbunden ist.

5. Vorrichtung zur Erzeugung von Energie aus Biomasse gemäß einem der vorangehenden Ansprüche, **dadurch gekennzeichnet, dass** das Arbeitsmedium, das von zumindest einer der Turbinen (28, 34) austritt, als Oxidator in zumindest einer Verbrennungskammer verwendet wird.

6. Vorrichtung zur Erzeugung von Energie aus Biomasse gemäß einem der vorangehenden Ansprüche, **dadurch gekennzeichnet, dass** sie aufweist einen Raum (50), in welchem eine Verbrennungskammer (40) angeordnet ist, die einer Biomassenzuführung vorgeschaltet ist und einer ersten Tauscherkammer (56) nachgeschaltet ist, die über ein Abgasrohr (60) für warme Gase verlängert wird, wobei warme Luft, die von der ersten Turbine (28) stammt, zwischen einerseits dem Gehäuse des Raums (50) und andererseits den Gehäusen der Verbrennungskammer (40), der Kammer des Tauschers (56) und des Abgasrohrs (60) zirkuliert, wobei zumindest ein Teil der warmen Luft über eine Vielzahl von Rohrabzweigungen in die Verbrennungskammer eingeführt wird.

7. Vorrichtung zur Erzeugung von Energie aus Biomasse gemäß Anspruch 6, **dadurch gekennzeichnet, dass** der erste Tauscher (30) in einer zweiten Kammer des Tauschers (58) angeordnet ist, die durch den Raum (50) und das Abgasrohr (60) begrenzt wird.

8. Vorrichtung zur Erzeugung von Energie aus Biomasse gemäß Anspruch 6, **dadurch gekennzeichnet, dass** der erste Tauscher (30) zumindest ein Rohr aufweist, in welchem das Arbeitsmedium zirkuliert und das in einer zweiten Kammer des Tauschers (58), der durch den Raum (50) und das Abgasrohr (60) begrenzt wird, und in dem Abgasrohr (60) angeordnet ist.

9. Vorrichtung zur Erzeugung von Energie aus Biomasse gemäß einem der Ansprüche 6 bis 8, **dadurch gekennzeichnet, dass** sie aufweist einen Tauscher (30'), der zwischen dem ersten Tauscher (30) und der ersten Turbine (28) zwischengeschaltet und in der ersten Kammer des Tauschers (56) angeordnet ist.

10. Vorrichtung zur Erzeugung von Energie aus Biomasse gemäß Anspruch 9, **dadurch gekennzeichnet, dass** der zweite Tauscher (38) in der ersten Kammer des Tauschers (56) angeordnet ist.

## Claims

1. Device for producing energy from biomass, comprising:
- a first train of shafts (24) to which a compressor (26) and a first turbine (28) are connected,
- a first exchanger (30) providing heat exchanges between firstly a so-called working fluid previously compressed by said compressor (26) and expanded in said first turbine (28), and secondly hot gases issuing from the combustion of the biomass,
- a second train of shafts (32) to which a second turbine (34) and means (36) of converting the kinetic energy into another energy are connected,
- a second exchanger (38) providing the heat exchanges between firstly a working fluid supplying the second turbine (34) and secondly hot gases issuing from the combustion of the biomass,
**characterised in that**, at the output of the first exchanger (30), part of the working fluid is directed either to the first turbine (28) or to the second exchanger (38), and the working fluid used in said second turbine (34) is the working fluid emerging from the compressor (26) that passes through the first exchanger (30) and the second exchanger (38), not used by the first turbine (28) at the discharge from the first exchanger (30).

2. Device for producing energy from biomass according to claim 1, **characterised in that** the characteristics of the compressor (26), the turbine (28) and/or the exchanger (30) are determined so that the turbine (28) produces energy corresponding strictly to the energy necessary for the compressor (26).

3. Device for producing energy from biomass according to claim 1 or 2, **characterised in that** means of regulating the flows are provided at the discharge from the first exchanger (30) in order to adjust the flow of working fluid oriented towards each of the two turbines.

4. Device for producing energy from biomass according to claim 3, **characterised in that** the second turbine (34) is connected to a second exchanger (38) arranged in series with the first exchanger (30).

5. Device for producing energy from biomass according to any one of the preceding claims, **characterised in that** the working fluid emerging from at least one turbine (28, 34) is used as an oxidant in at least one combustion chamber.

6. Device for producing energy from biomass according to any one of the preceding claims, **characterised in that** it comprises an enclosure (50) in which there is placed a combustion chamber (40) connected upstream to a biomass supply and downstream to a first exchange chamber (56) extended by an exhaust pipe (60) for the hot gases, the hot air issuing from the first turbine (28) circulating between the envelope of said enclosure (50) and the envelopes of the combustion chamber (40), the exchange chamber (56) and the exhaust pipe (60), at least some of said hot air being introduced via a plurality of tappings into the combustion chamber.

7. Device for producing energy from biomass according to claim 6, **characterised in that** the first exchanger (30) is arranged in a second exchange chamber (58) delimited by the enclosure (50) and the exhaust pipe (60).

8. Device for producing energy from biomass according to claim 6, **characterised in that** the first exchanger (30) comprises at least one pipe in which the working fluid is flowing disposed in a second exchange chamber (58) delimited by the enclosure (50) and the exhaust pipe (60) and in the exhaust pipe (60).

9. Device for producing energy from biomass according to any one of claims 6 to 8, **characterised in that** it comprises an exchanger (30') interposed between the first exchanger (30) and the first turbine (28) disposed in the first exchange chamber (56).

10. Device for producing energy from biomass according to claim 9, **characterised in that** the second exchanger (38) is disposed in the first exchange chamber (56).
